# EUROPEAN PATENT APPLICATION

(11) **EP 1 253 801 A2**
(43) Date of publication of application: **30.10.2002**
(21) Application number: 02008881.1
(22) Date of filing: 20.04.2002
(51) Int. Cl.: H04Q 11/04, H04Q 3/00

(54) **Method and apparatus capable of enabling a network interface device to be provisioned remotely**

(30) Priority: 10.12.2001 US 13639; 24.04.2001 US 286426 P
(71) Applicant: Alcatel S.A., 75008 Paris (FR)
(72) Inventor: De Paul, Kenneth E., Wake Forest, NC 27587 (US); Bailley, Josh, Raleigh, NC 27615 (US)
(74) Representative: Dreiss, Fuhlendorf, Steimle & Becker

(57) **Abstract**

A method for enabling a network interface device (NID) at a subscriber premise to be remotely provisioned, comprising: transmitting a control command (12) to a command processor of the remotely provisionable NID from a central office communication apparatus; determining a requested control state (16) associated with the control command; altering the remotely provisionable NID from a present control state to the requested control state (22).

## Description

### CROSS REFERENCE TO RELATED APPLICATION

This application claims benefit under 35 U.S.C. §119 of United States provisional patent application Serial Number 60/286,426, entitled *Smart NID,* which was filed on April 24, 2001.

### FIELD OF THE DISCLOSURE

The disclosures herein relate generally to network interface devices and more particularly to methods and systems capable of enabling a network interface device to be provisioned remotely.

### BACKGROUND

A provider of digital subscriber line (DSL) services often has the need and/or desire to enable, disable add, change and test DSL services of a subscriber. Enabling, disabling, adding, changing and testing DSL services are hereinafter referred to jointly as provisioning of DSL services. In many instances, the responsiveness and manner in which provisioning of DSL services is carried out can have a tremendous impact on subscriber loyalty and expanding a subscriber base.

Provisioning of some DSL services, such as disabling DSL service and disconnecting physical transmission lines, is capable of being performed at a DSL service provider location (i.e. at a central office communication apparatus). However, provisioning of many DSL services has traditionally required dispatching a service provider technician to service a customer premise network interface device (NID). Dispatching a service provider technician is costly and time consuming. Furthermore, the time element associated with dispatching a service provider technician for provisioning of DSL services and the related inconvenience of a DSL service subscriber can adversely affect maintaining subscriber loyalty and growing a subscriber base.

Accordingly, a method and an apparatus capable of enabling a network interface device to be provisioned remotely are each useful.

### BRIEF DESCRIPTION OF THE DRAWINGS

FIG. 1 is a flow chart view depicting a method for remotely provisioning a network interface device in accordance with an embodiment of the disclosures herein.
FIG. 2 is a block diagram view depicting a communication system in accordance with an embodiment of the disclosures herein, wherein a plurality of communication links extend between a remotely provisionable network interface device of a customer premise communication apparatus and a central office communication apparatus.
FIG. 3 is a block diagram depicting various components and component interconnections of the network interface device depicted in FIG. 2.
FIG. 4 is a block diagram view depicting a state enabler in accordance with an embodiment of the disclosures herein and in accordance with the communication system depicted in FIGS. 2 and 3.
FIG. 5 is a block diagram view depicting a communication system in accordance with an embodiment of the disclosures herein, wherein a single communication link extends between a remotely provisionable network interface device of a customer premise communication apparatus and a central office communication apparatus and wherein a line controller of the remotely provisionable network interface device is connected in a digital subscriber line associated with the communication link.

### DETAILED DESCRIPTION OF THE FIGURES

Various aspects of apparatuses and methods for enabling a network interface device (NID) at a customer premises to be remotely provisioned are disclosed herein. Such a NID is referred to herein as a remotely provisionable NID. The remotely provisionable NID provides functionality that generally eliminates the need to dispatch a service provider technician to the customer premise for provisioning the NID, thus reducing cost, saving time and increasing responsiveness to service requests. In addition to remote provisioning providing certain efficiency and profitability advantages to a service provider, it also has a positive impact on maintaining subscriber loyalty and growing a subscriber base.

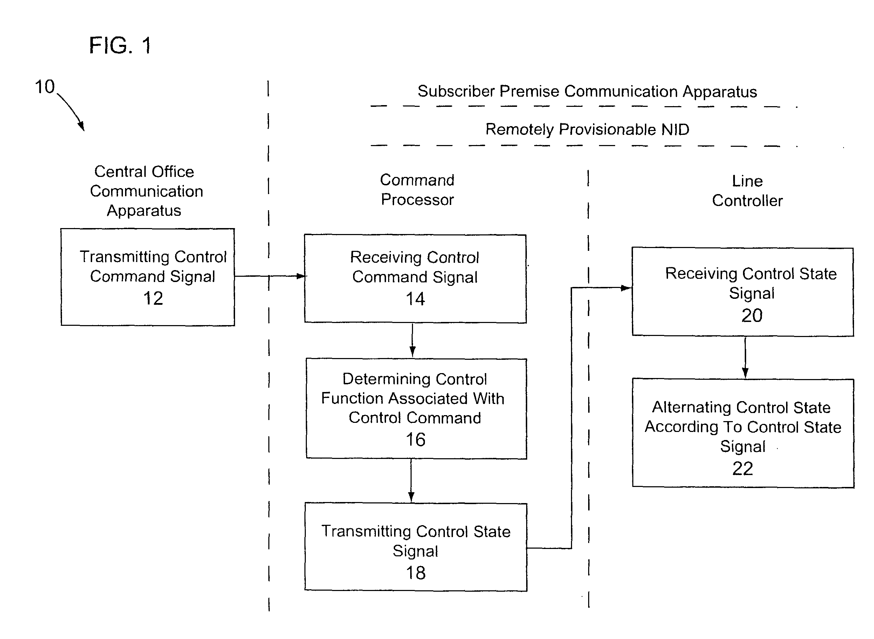

In accordance with one embodiment of the disclosures herein and as depicted in FIG. 1, a method 10 for enabling a NID at a subscriber premise to be remotely provisioned includes an operation 12 for transmitting a control command to a command processor of the remotely provisionable NID from a central office communication apparatus. In other embodiments (not shown), it is contemplated that the control command is transmitted from a remote location from the central office, but operationally and/or administratively affiliated with the central office. After performing the operation 12 for transmitting the control command to a command processor of the remotely provisionable NID, the command processor performs an operation 14 for receiving the control command.

An operation 16 is performed for determining a requested control state associated with the control command. The operation 16 for determining the control function is at least partially facilitated by the command processor. In response to determining the requested control state, an operation 18 is performed for transmitting a control state signal to from the command processor to the line controller. The control state signal corresponds to the requested control state. After the line controller performs an operation 20 for receiving the control state signal, the line controller performs an operation 22 for altering the remotely provisionable NID from a present control state to the requested control state. The operation 22 for altering the control state of the remotely provisionable NID is at least partially facilitated by a line control device of the remotely provisionable NID.

Examples of control states include a control state capable of activating service, a control state capable of de-activating service, a control state capable of testing transmission line continuity, a control state capable of terminating a transmission line with a test load and a control state capable of inverting a connected orientation of a set of transmission lines with respect to a corresponding set of subscriber premises communication equipment.

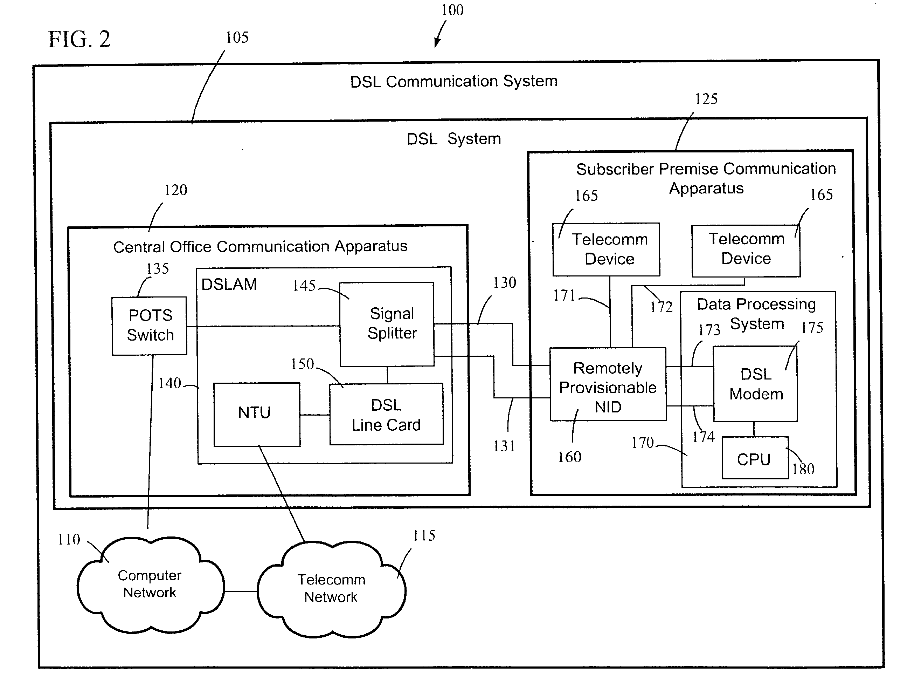

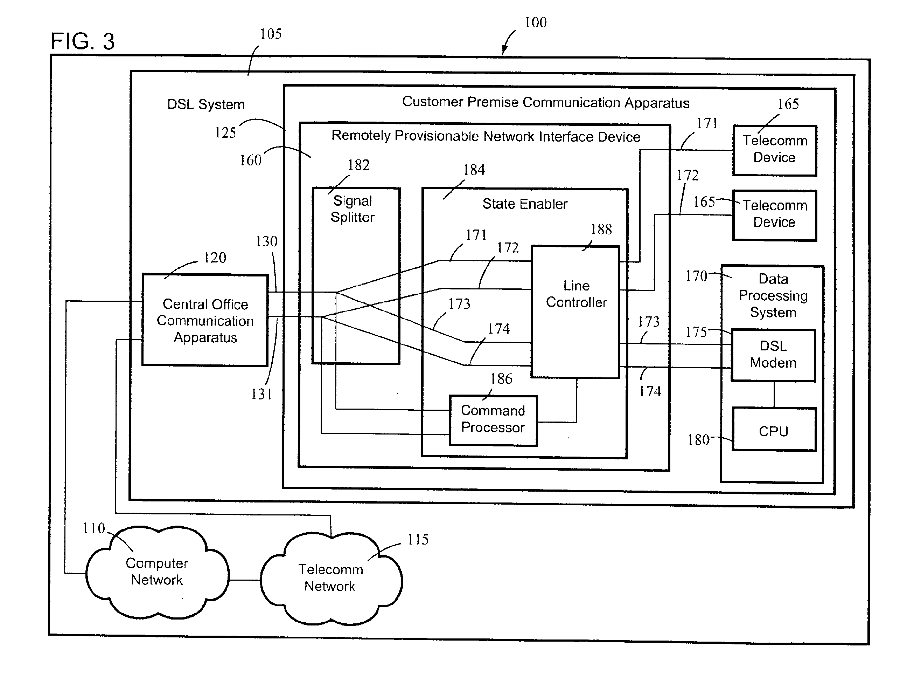

A communication system 100 in accordance with an embodiment of the disclosures herein is depicted in FIGS. 2 and 3. The communication system 100 includes a Digital Subscriber Line (DSL) system 105 having a telecommunication network 110 and a data network 115 connected thereto. The telecommunication network 110 is connected directly to the data network 115 for enabling direct communication therebetween. A Public Switched Telephone Network (PSTN) is an example of the telecommunication network 110 and an Asynchronous Transfer Mode (ATM) compatible communication network is an example of the data network 115. A suitably configured computer network system, such as a suitably configured portion of the Internet, is an example of an ATM-compatible data network. In other embodiments (not shown) of the communication system 100, the telecommunication network 110 is not connected directly to the data network 115.

The DSL system 105 includes a central office communication apparatus 120 and a subscriber premise communication apparatus 125 connected to the central office apparatus 120 for providing a DSL service therebetween. The central office communication apparatus 120 facilitates Plain Old Telephone Service (POTS) and DSL service for the subscriber premise communication apparatus 125. POTS and DSL services are provided via the telecommunication network 110 and the data network 115, respectively. The central office communication apparatus 120 is connected to the subscriber premise communication apparatus 125 via a first paired-conductor transmission line 130 and a second paired-conductor transmission line 131. A twisted pair telephone line that is typically used for carrying telephony signals is an example of the first and the second paired-conductor transmission lines 130, 131. The central office communication apparatus 120 is an example of an upstream communication apparatus with respect to the subscriber premise communication apparatus 125.

DSL data signals are carried over the first and/or the second paired-conductor transmission lines 130, 131. A POTS signal is also carried over the first and/or the second paired-conductor transmission lines 130, 131. A multiplexed signal comprises a DSL data signal and a POTS signal and is carried on the transmission lines 130, 131 between the central office communication apparatus 120 and the subscriber premise communication apparatus 160. A communication link as referred to herein includes multiplexed signal carried on a transmission line (e.g. the first transmission line 130 or the second transmission line 131) between two endpoints (e.g. the central office communication apparatus 120 and subscriber premise communication apparatus 125).

Referring to FIG. 2, the central office communication apparatus 120 includes a POTS switch 135 and a Digital Subscriber Line Access Multiplexor (DSLAM) 140. The DSLAM 140 includes a signal splitter 145, a DSL line card 150 and a Network Termination Unit (NTU) 155. The POTS switch 135 and the DSL line card 150 are connected to the signal splitter 145 of the DSLAM 140. The DSLAM 140 is connected to the data network 115 via the NTU 155. An active signal splitter and a passive signal splitter are examples of the signal splitter 145 of the DSLAM 140. An Inverse Multiplexing (IM) over ATM DSL line card (i.e. an IMA-DSL line card) is an example of the DSL line card 150. One technique for facilitating IM techniques over ATM formatted communication links is described in ATM forum standard (AF-PHY-0086.001).

As shown in FIGS. 2 and 3, the subscriber premise communication apparatus 125 includes a remotely provisionable NID 160, a plurality of telecommunication devices 165 and a data processing system 170. In at least one embodiment of the subscriber premise communication system 125, the remotely provisionable NID 160 is located on the telecommunication provider side of a subscriber premise demarcation line. A first POTS line 171 and a second POTS line 172 are connected between the signal splitter 182 of the remotely provisionable NID 160 and a first one and a second one of the telecommunication devices 165, respectively. A first DSL line 173 and a second DSL line 174 are connected between the signal splitter 182 of the remotely provisionable NID 160 and the data processing system 170. The POTS lines 171, 172 and the DSL lines 173, 174 are examples of subscriber premises paired-conductor transmission line.

The data processing system 170 includes a DSL modem 175 and a central processing unit (CPU) 180. The telecommunication devices 165 and the data processing system 170 are both connected to the remotely provisionable NID 160. The DSL modem 175 is connected between the remotely provisionable NID 160 and the CPU 180. An IMA-DSL modem is an example of the DSL modem 175. A telephone and a personal computer are examples of the telecommunication device 165 and the CPU 180, respectively.

Referring to FIG. 3, the remotely provisionable NID 160 includes a signal splitter 182 and a state enabler 184. The state enabler 184 and/or components thereof is an example of a data processor. An active signal splitter and a passive signal splitter are examples of the signal splitter 182 of the remotely provisionable NID 160. The signal splitter 182 of the remotely provisionable NID 160 is electrically connected between the central office communication apparatus 120 and the state enabler 184. Specifically, the first and the second paired-conductor transmission lines 130, 131 are electrically connected between the signal splitter 182 of the remotely provisionable NID 160 and the signal splitter 145 of the central office communication apparatus 120. In this manner, communication links are capable of being established between the central office communication apparatus 120 and the subscriber premise communication apparatus 125.

Still referring to FIG. 3, the state enabler 184 includes a command processor 186 and a line controller 188. Each one of the POTS lines 171, 172 and each one of the DSL lines 173, 174 are connected across the line controller 188. It is contemplated herein that at least one of the POTS lines 171, 172 may bypass (i.e. not be connected across) the line controller. It is contemplated herein that the command processor 186 and the line controller 188 may be physically separate circuits and/or devices, and that such circuits and/or devices may be integral with each other.

Any power requirements of the state enabler may be accommodated by a power supply circuit (not shown) that draws current from one or both of the POTS lines 171, 172. In a typical application, one or both of the POTS lines 171, 172 are capable of supporting a relatively small power supply (e.g. up to about 150 mW) without any loss of service on the POTS line. Similarly, one or both of the POTS lines 171, 172 are capable of supporting a relatively larger power supply with a momentary loss of service on one or both of the POTS lines 171, 172.

The command processor 186 is electrically connected between the signal splitter 182 of the remotely provisionable NID 160 and the line controller 188. The line controller 188 is electrically connected between the signal splitter 182 of the remotely provisionable NID 160 and the data processing system 170. As depicted, the line controller 188 is also electrically connected between the signal splitter 182 of the remotely provisionable NID 160 and at least one of the telecommunication devices 165. It is contemplated herein that in accordance with at least one embodiment of the disclosures herein, the line controller 188 is not electrically connected between the signal splitter 182 of the remotely provisionable NID 160 and any of the telecommunication devices 165.

The command processor 186 is a device capable of receiving a control command from the central office communication apparatus 120, determining a control function associated with the control command and transmitting a control state signal to the line controller 188. A field programmable gate array is an example of the command processor 186. In at least one example of the command processor 186, one or more control functions and information for enabling a control command to be associated therewith are capable of being downloaded from the central office communication apparatus 120 (i.e. an upstream communication apparatus). Each control state is associated with one of such control functions.

In at least one embodiment of the disclosures herein, a signal corresponding to the control command (i.e. the control command signal) is carried on a designated frequency of the multiplexed signal transmitted from the central office communication apparatus 120 to the customer premise communication apparatus 160. A multiplexed signal transmitted from the central office communication apparatus 120 to the customer premise communication apparatus 160 is referred to herein as a downstream multiplexed signal. It is contemplated herein that the multiplexed signal carrying the command control may be carried on one or more of the transmission lines connected between the central office communication apparatus 120 and the customer premise communication apparatus 160. The signal splitter 182 of the remotely provisionable NID 160 facilitates splitting the frequency or frequency range associated with the command control signal (i.e. the designated frequency) from the multiplexed signal. Once split from the multiplexed signal, the command control signal is received by the command processor 186.

The line controller 188 is a device capable of altering the remotely provisionable NID 160 from a present control state (i.e. a first control state) to a desired control state (i.e. a second control state). The line controller 188 receives a control state signal from the signal processor 186. The control state signal corresponds to the command control received by the command processor. A circuit including one or more relay devices (e.g. solid state relays, mechanical relays, etc), one or more load devices (e.g. impedance loads, resistive loads, capacitive loads, etc) and/or one or more devices for interpreting control command signals is an example of the line controller 188.

Table 1 below depicts embodiments of control command codes, control commands associated with each of the control commands, and control state functionality associated with each of the control commands. In at least one embodiment of transmitting a control command to the command processor 186, a control code such as one of the control codes in Table 1 is transmitted to the command processor.

**Table 1**

| **Control Command Code** | **Control Command** | **Resulting Function** |
|---|---|---|
| 100 | Activate Connection: Line 1 | Enable Transmission via Line 1 |
| 101 | Activate Connection: Line 2 | Enable Transmission via Line 2 |
| 200 | De-activate Connection: Line 1 | Disable Transmission via Line 1 |
| 201 | De-activate Connection: Line 2 | Disable Transmission via Line 2 |
| 300 | Test Line Continuity: Line 1 | Terminate (Short) Line 1 Conductors |
| 301 | Test Line Continuity: Line 2 | Terminate (Short) Line 2 Conductors |
| 400 | Test Line Conductors: Lines 1&2 | Sequentially Terminate: L1/R:L2/R, L1/T:L2/R, L1/R:L2/T, L1/T:L2/T |
| 500 | Apply Telephonic Test Load: Line 1 | Terminate Telephonic Impedance Test Load Between Line 1 Conductors |
| 501 | Apply Telephonic Test Load: Line 2 | Terminate Telephonic Impedance Test Load Between Line 2 Conductors |
| 600 | Apply DSL Test Load: Line 1 | Terminate DSL Impedance Load Between Line 1 Conductors |
| 601 | Apply DSL Test Load: Line 2 | Terminate DSL Impedance Load Between Line 2 Conductors |
| 700 | Invert Connections: Line 1&2 | Invert Connected Orientation Relative |
| To Subscriber Premise Devices | | |

Facilitating a control command for activating connection of a line is an example of a control command capable of facilitating a control state capable of enabling service to be activated. Facilitating a control command for de-activating connection of a line is an example of a control command capable of facilitating a control state for enabling service to be de-activated. Facilitating a control command for testing continuity of a line is an example of a control command capable of facilitating a control state for enabling transmission line continuity to be tested. Facilitating a control command for applying a test load to a line is another example of a control command capable of facilitating a control state for enabling transmission line continuity to be tested. Facilitating a control command for inverting the connected orientation of a set of transmission lines relative to a corresponding set of subscriber premises communication equipment is an example of a control command capable of facilitating a control state for optimizing data transmission performance over one or both lines and/or enabling data transmission performance over one or both lines to be tested.

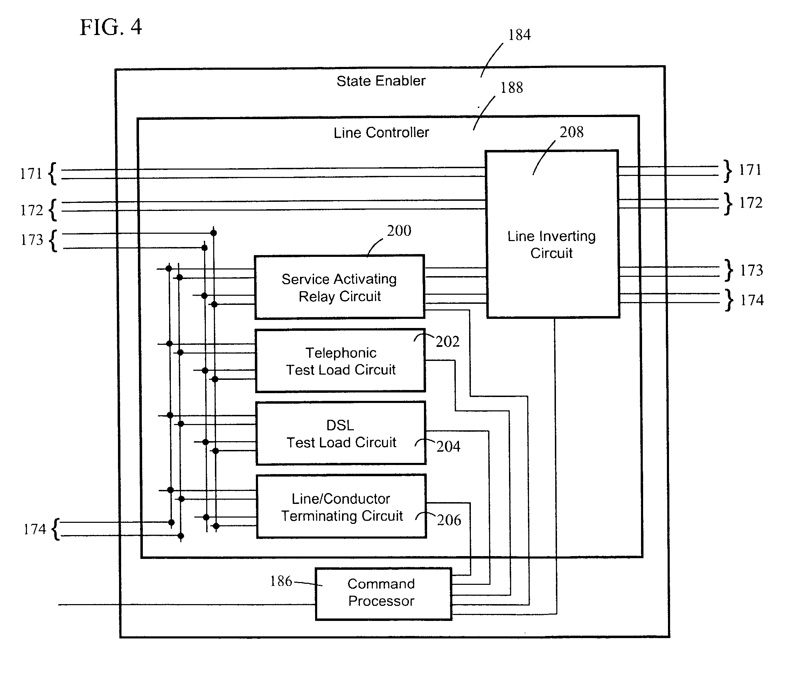

FIG. 4 depicts an embodiment of the line controller 188 of the state enabler 184. The line controller 188 includes a plurality of circuits for enabling various control states to be implemented. A service activation circuit 200 enables facilitating a control state for activating DSL service and de-activating DSL service on the first DSL line 173 and/or the second DSL line 174. A telephonic test load circuit 202 enables facilitating a control state for applying a telephonic test load across the conductors of the first DSL line 173 and/or the second DSL line 174. A DSL test load circuit 204 enables facilitating a control state for applying a DSL test load across the conductors of the first DSL line 173 and/or the second DSL line 174. A line/conductor terminating circuit 206 enables facilitating a control state for terminating (i.e. shorting) conductors on the first DSL line 173 and/or the second DSL line 174, thereby the conductors of the first DSL line 173 and/or the second DSL line 174 to be tested for continuity, resistance, impedance, etc. A line inverting circuit 208 enables facilitating a control state for inverting a connected orientation of one or both of the physical lines associated with DSL lines 173, 174 with one or both of the physical lines associated with POTS lines 171, 172.

The DSL lines 173, 174 are connected across the service activating circuit 200 and the line inverting circuit 208. The service activating circuit 200 and the line inverting circuit 208 are connected in series with respect to the DSL lines 173, 174. The telephonic test load circuit 202, the DSL test load circuit 204 and the line/conductor terminating circuit 206 are separately connected in parallel with each of the DSL lines 173, 174. The command processor 186 is connected to the service activating circuit 200, the telephonic test load circuit 202, the DSL test load circuit 204, the line/conductor terminating circuit 206 and the line inverting circuit 208.

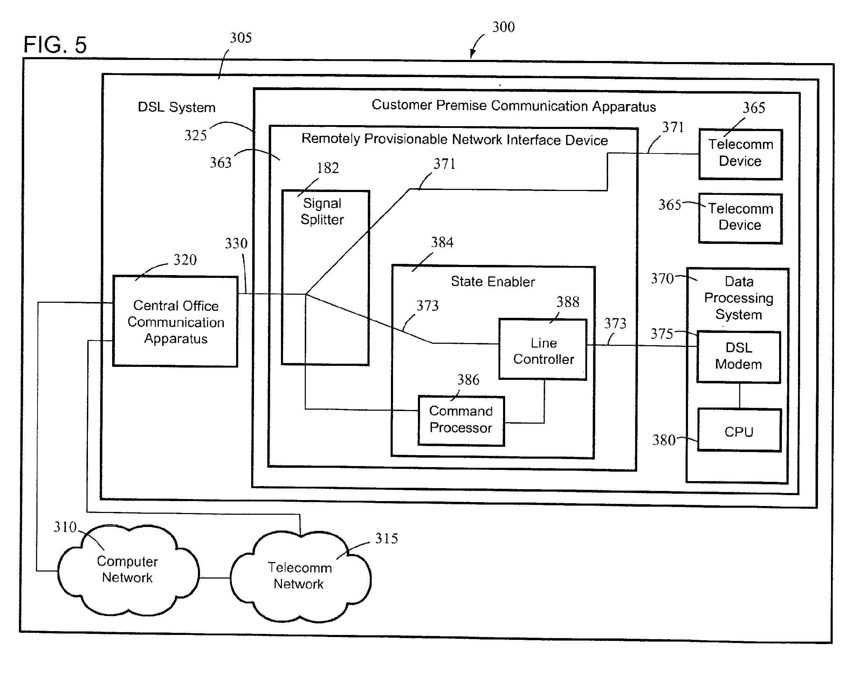

FIG. 5 depicts a communication system 300 in accordance with another embodiment of the disclosures herein. With exception of the specific function and structure of the remotely provisionable NID 360, the overall function and/or structure of the communication system 300 is essentially similar to the overall function and/or structure of the communication system 100 depicted in FIGS 2 and 3. Accordingly, only the differentiating function and structure of the remotely provisionable NID 360 will be discussed. It should be noted that similar numerals denote similar elements in the communication system 300 and the communication system 500. For example, the communication system 500 includes a central office communication system 320 having function and/or structure that is essentially similar to that of the central office communication system 120 depicted in FIGS. 2 and 3.

The communication system 300 depicted in FIG. 5 includes a single transmission line 330 connected between the central office communication system 320 and a remotely provisionable NID 360 of a customer premise communication apparatus 325. The transmission line 330 is capable of carrying multiplexed signals thereon and facilitates a communication link between the central office communication apparatus 320 and the customer premises communication apparatus 325. A single POTS line 371 is connected between a signal splitter 382 of the remotely provisionable NID and a telecommunication device 385 of the customer premise communication apparatus 325. A single DSL line 373 is connected between the signal splitter 382 of the remotely provisionable NID and a data processing system 370.

The remotely provisionable NID includes a line controller 388. The POTS line 371 bypasses the line controller 388. Accordingly, the line inverting functionality disclosed above is not capable of being facilitated by the line controller 384 in a manner as disclosed above.

In the preceding detailed description, reference has been made to the accompanying drawings that form a part hereof, and in which are shown by way of illustration specific embodiments in which the invention may be practiced. These embodiments, and certain variants thereof, have been described in sufficient detail to enable those skilled in the art to practice the invention. It is to be understood that other suitable embodiments may be utilized and that logical, mechanical, chemical and electrical changes may be made without departing from the spirit or scope of the invention. For example, functional blocks shown in the figures could be further combined or divided in any manner without departing from the spirit or scope of the invention. To avoid unnecessary detail, the description omits certain information known to those skilled in the art. The preceding detailed description is, therefore, not intended to be limited to the specific forms set forth herein, but on the contrary, it is intended to cover such alternatives, modifications, and equivalents, as can be reasonably included within the spirit and scope of the appended claims.

## Claims

1. A method capable of enabling a network interface device to be provisioned remotely, comprising:
receiving a control command, wherein the control command is received by a network interface device located at a subscriber premises;
determining a requested control state associated with the control command, wherein the control function is determined at the network interface device; and
in response to determining the requested control state, altering the network interface device from a present control state to the requested control state.

2. The method of claim 1 wherein the control command is transmitted to the network interface device on a paired-conductor transmission line using a designated frequency of a downstream multiplexed signal.

3. The method of claim 1 wherein control command initiates enabling transmission of data signals between an upstream communication apparatus and a data processing system connected to the network interface device.

4. The method of claim 1 wherein the control command initiates disabling transmission of data signals between an upstream communication apparatus and a data processing system connected to the network interface device.

5. The method of claim 1 wherein the control command initiates terminating a first conductor of a paired-conductor transmission line with a second conductor of the paired-conductor transmission line.

6. The method of claim 1 wherein the control command initiates terminating at least one conductor of a first paired-conductor transmission line with at least one conductor of a second paired-conductor transmission line.

7. The method of claim 1 wherein the control command initiates connecting a test load between a first conductor and a second conductor of a paired-conductor transmission line.

8. The method of claim 1 wherein:
a first subscriber premises paired-conductor transmission line is connected between the network interface device and a telecommunication device;
a second subscriber premises paired-conductor transmission line is connected between the network interface device and a data processing system; and
the control command initiates inverting a connected orientation of the first and the second paired-conductor transmission lines with respect to the telecommunication device and the data processing system.

9. The method of claim 1 wherein determining the control function associated with the control command includes correlating a control command with one of a plurality of available control functions.

10. The method of claim 1, further comprising:
downloading control functions associated with the control states from an upstream communication apparatus to the network interface device prior to the control command being received by the network interface device.

11. The method of claim 1 wherein:
a state enabler is electrically connected between a signal splitter of the network interface device and a data processing system connected to the network interface device; and
altering the network interface device from the present control state to the requested control state includes transmitting a control state signal from a command processor of the state enabler to a line controller of the state enabler in response to receiving the control command at the command processor of the state enabler.

12. The method of claim 11 wherein:
the command processor of the state enabler is electrically connected between the signal splitter and the line controller of the state enabler;
the line controller of the state enabler is electrically connected between the signal splitter and the data processing system connected to the network interface device; and
the command processor of the state enabler is capable of receiving the control command, determining the control function associated with the control command and transmitting the control state signal to the line controller of the state enabler.

13. The method of claim 11 wherein:
the signal splitter is capable of separating a telephonic signal and a digital subscriber line signal of a downstream multiplexed signal; and
the control command is transmitted on a designated frequency of the downstream multiplexed signal.

14. The method of claim 13 wherein the designated frequency is an unused frequency of the downstream multiplexed signal.

15. The method of claim 1 wherein altering the network interface device from the present control state to the requested control state includes altering the network interface device from a transmission-disabled state to a transmission-enabled state.

16. The method of claim 15 wherein:
altering the network interface device from the transmission-disabled state to the transmission-enabled state is performed in response to the network interface device receiving the control command; and
the control command initiates transmission of DSL signals between an upstream communication apparatus and a data processing system connected to the network interface device being enabled.

17. The method of claim 15 wherein transmission of data signals between an upstream communication apparatus and a data processing system connected to the network interface device is enabled when the network interface device is in the transmission-enabled state.

18. The method of claim 15 wherein the network interface device comprises a device capable of selectively enabling and disabling continuity of at least one conductor of a paired-conductor transmission line.

19. The method of claim 1 wherein altering the network interface device from the present control state to the requested control state includes altering the network interface device from a transmission-enabled state to a transmission-disabled state.

20. The method of claim 19 wherein:
altering the network interface device from the transmission-enabled state to the transmission-disabled state is performed in response to the network interface device receiving the control command; and
the control command initiates transmission of DSL signals between an upstream communication apparatus and a data processing system connected to the network interface device being disabled.

21. The method of claim 19 wherein transmission of data signals between an upstream communication apparatus and a data processing system connected to the network interface device is disabled when the network interface device is in the transmission-disabled state.

22. The method of claim 19 wherein the network interface device comprises a device capable of selectively enabling and disabling continuity of at least one conductor of a paired-conductor transmission line.

23. The method of claim 1 wherein:
altering the network interface device from the present control state to the requested control state includes altering the network interface device from a transmission line non-terminated state to a transmission line terminated state; and
a first conductor of a paired-conductor transmission line is terminated to a second conductor of the paired-conductor transmission line when the network interface device is in the transmission line terminated state.

24. The method of claim 23 wherein:
altering the network interface device from the transmission line non-terminated state to the transmission line terminated state is performed in response to the network interface device receiving the control command; and
the control command initiates the first conductor of the paired-conductor transmission line being terminated to the second conductor of the paired-conductor transmission line.

25. The method of claim 1 wherein:
altering the network interface device from the present control state to the requested control state includes altering the network interface device from a transmission line conductor non-terminated state to transmission line conductor terminated state; and
at least one conductor of a first paired-conductor transmission line is terminated to at least one conductor of a second paired-conductor transmission line when the network interface device is in the transmission line conductor terminated state.

26. The method of claim 25 wherein:
altering the network interface device from the transmission line conductor non-terminated state to the transmission line conductor terminated state is performed in response to the network interface device receiving the control command; and
the control command initiates said at least one conductor of the first paired-conductor transmission line being terminated to said at least one conductor of the second paired-conductor transmission line.

27. The method of claim 1 wherein:
altering the network interface device from the present control state to the requested control state includes altering the network interface device from a premises equipment impedance load state to a test load state; and
a test load is terminated between a first conductor and a second conductor of a first paired-conductor transmission line when the network interface device is in the test load state.

28. The method of claim 27 wherein:
altering the network interface device from the premises equipment impedance load state to the test load state is performed in response to the network interface device receiving the control command; and
the control command initiates the test load being terminated between the first conductor and the second conductor of the first paired-conductor transmission line.

29. The method of claim 28 wherein the network interface device comprises the test load.

30. The method of claim 1 wherein:
a first subscriber premises paired-conductor transmission line is connected between the network interface device and a telecommunication device when the network interface device is in the first control state;
a second subscriber premises paired-conductor transmission line is connected between the network interface device and a data processing system when the network interface device is in the first control state; and
altering the network interface device from the present control state to the requested control state the control command initiates inverting a connected orientation of the first and the second paired-conductor transmission lines with respect to the telecommunication device and the data processing system.

31. The method of claim 30 wherein the network interface device comprises a device capable of selectively inverting a connected orientation of the first and the second paired-conductor transmission lines with respect to the telecommunication device and the data processing system.

32. An apparatus capable of enabling a network interface device to be provisioned remotely, the apparatus comprising:
a remotely provisionable network interface device including a state enabler and a signal splitter,
wherein the state enabler is electrically connected between the signal splitter and a data processing system connected to the network interface device; and
a data processor program, wherein the data processor program is capable of enabling the state enabler to facilitate:
receiving a control command, wherein the control command is received by the state enabler of the network interface devices;
determining a requested control state associated with the control command,
wherein the control function is determined at the state enabler of the network interface device; and
in response to determining the requested control state, altering the network interface device from a present control state to the requested control state.

33. The apparatus of claim 32, further comprising:
a paired-conductor transmission line connected to the remotely provisionable network interface device;
wherein the control command is transmitted to the network interface device on a paired-conductor transmission line using a designated frequency of a downstream multiplexed signal.

34. The apparatus of claim 32 wherein control command initiates enabling transmission of data signals between an upstream communication apparatus and a data processing system connected to the network interface device.

35. The apparatus of claim 32 wherein the control command initiates disabling transmission of data signals between an upstream communication apparatus and a data processing system connected to the network interface device.

36. The apparatus of claim 32 wherein the control command initiates terminating a first conductor of a paired-conductor transmission line with a second conductor of the paired-conductor transmission line.

37. The apparatus of claim 32 wherein the control command initiates terminating at least one conductor of a first paired-conductor transmission line with at least one conductor of a second paired-conductor transmission line.

38. The apparatus of claim 32 wherein the control command initiates connecting a test load between a first conductor and a second conductor of a paired-conductor transmission line.

39. The apparatus of claim 32, further comprising:
a first subscriber premises paired-conductor transmission line connected between the network interface device and a telecommunication device; and
a second subscriber premises paired-conductor transmission line is connected between the network interface device and a data processing system;
wherein the control command initiates inverting a connected orientation of the first and the second paired-conductor transmission lines with respect to the telecommunication device and the data processing system.

40. The apparatus of claim 32 wherein enabling the state enabler to facilitate determining the control function associated with the control command includes enabling the state enabler to facilitate correlating a control command with one of a plurality of available control functions.

41. The apparatus of claim 32 wherein:
the state enabler includes a command processor and a line controller; and
enabling the state enabler to facilitate altering the network interface device from the present control state to the requested control state includes enabling the state enabler to facilitate transmitting a control state signal from a command processor of the state enabler to a line controller of the state enabler in response to receiving the control command at the command processor of the state enabler.

42. The apparatus of claim 41 wherein:
the command processor is electrically connected between the signal splitter and the line controller;
the line controller is electrically connected between the signal splitter and the data processing system; and
the command processor is capable of receiving the control command, determining the control function associated with the control command and transmitting the control state signal to the line controller of the state enabler.

43. The apparatus of claim 41 wherein:
the signal splitter is capable of separating a telephonic signal and a digital subscriber line signal of a downstream multiplexed signal; and
the control command is transmitted on a designated frequency of the downstream multiplexed signal.

44. The apparatus of claim 32 wherein enabling the state enabler to facilitate altering the network interface device from the present control state to the requested control state includes enabling the state enabler to facilitate altering the network interface device from a transmission-disabled state to a transmission-enabled state.

45. The apparatus of claim 44 wherein:
altering the network interface device from the transmission-disabled state to the transmission-enabled state is performed in response to the network interface device receiving the control command; and
the control command initiates transmission of DSL signals between an upstream communication apparatus and a data processing system connected to the network interface device being enabled.

46. The apparatus of claim 44 wherein transmission of data signals between an upstream communication apparatus and a data processing system connected to the network interface device is enabled when the network interface device is in the transmission-enabled state.

47. The apparatus of claim 44 wherein the network interface device comprises a device capable of selectively enabling and disabling continuity of at least one conductor of a paired-conductor transmission line.

48. The apparatus of claim 32 wherein enabling the state enabler to facilitate altering the network interface device from the present control state to the requested control state includes enabling the state enabler to facilitate altering the network interface device from a transmission-enabled state to a transmission-disabled state.

49. The apparatus of claim 48 wherein:
altering the network interface device from the transmission-enabled state to the transmission-disabled state is performed in response to the network interface device receiving the control command; and
the control command initiates transmission of DSL signals between an upstream communication apparatus and a data processing system connected to the network interface device being disabled.

50. The apparatus of claim 48 wherein transmission of data signals between an upstream communication apparatus and a data processing system connected to the network interface device is disabled when the network interface device is in the transmission-disabled state.

51. The apparatus of claim 48 wherein the network interface device comprises a device capable of selectively enabling and disabling continuity of at least one conductor of a paired-conductor transmission line.

52. The apparatus of claim 32 wherein:
enabling the state enabler to facilitate altering the network interface device from the present control state to the requested control state includes enabling the state enabler to facilitate altering the network interface device from a transmission line non-terminated state to a transmission line terminated state; and
a first conductor of a paired-conductor transmission line is terminated to a second conductor of the paired-conductor transmission line when the network interface device is in the transmission line terminated state.

53. The apparatus of claim 52 wherein:
altering the network interface device from the transmission line non-terminated state to the transmission line terminated state is performed in response to the network interface device receiving the control command; and
the control command initiates the first conductor of the paired-conductor transmission line being terminated to the second conductor of the paired-conductor transmission line.

54. The apparatus of claim 32 wherein:
enabling the state enabler to facilitate altering the network interface device from the present control state to the requested control state includes enabling the state enabler to facilitate altering the network interface device from a transmission line conductor non-terminated state to transmission line conductor terminated state; and
at least one conductor of a first paired-conductor transmission line is terminated to at least one conductor of a second paired-conductor transmission line when the network interface device is in the transmission line conductor terminated state.

55. The apparatus of claim 54 wherein:
altering the network interface device from the transmission line conductor non-terminated state to the transmission line conductor terminated state is performed in response to the network interface device receiving the control command; and
the control command initiates said at least one conductor of the first paired-conductor transmission line being terminated to said at least one conductor of the second paired-conductor transmission line.

56. The apparatus of claim 32 wherein:
enabling the state enabler to facilitate altering the network interface device from the present control state to the requested control state includes enabling the state enabler to facilitate altering the network interface device from a premises equipment impedance load state to a test load state; and
a test load is terminated between a first conductor and a second conductor of a first paired-conductor transmission line when the network interface device is in the test load state.

57. The apparatus of claim 56 wherein:
altering the network interface device from the premises equipment impedance load state to the test load state is performed in response to the network interface device receiving the control command; and
the control command initiates the test load being terminated between the first conductor and the second conductor of the first paired-conductor transmission line.

58. The apparatus of claim 57 wherein the network interface device comprises the test load.

59. The apparatus of claim 32 wherein:
a first subscriber premises paired-conductor transmission line is connected between the network interface device and a telecommunication device when the network interface device is in the first control state;
a second subscriber premises paired-conductor transmission line is connected between the network interface device and a data processing system when the network interface device is in the first control state; and
altering the network interface device from the present control state to the requested control state the control command initiates inverting a connected orientation of the first and the second paired-conductor transmission lines with respect to the telecommunication device and the data processing system.

60. A data processor program product, comprising:
a data processor program processable by a data processor;
an apparatus from which the data processor program is accessible by the data processor; and
the data processor program being capable of enabling the data processor to facilitate:
receiving a control command, wherein the control command is received by a network interface device located at a subscriber premises;
determining a requested control state associated with the control command, wherein the control function is determined at the network interface device; and
in response to determining the requested control state, altering the network interface device from a present control state to the requested control state.

61. The data processor program product of claim 60 wherein the control command is transmitted to the network interface device on a paired-conductor transmission line using a designated frequency of a downstream multiplexed signal.

62. The data processor program product of claim 60 wherein control command initiates enabling transmission of data signals between an upstream communication apparatus and a data processing system connected to the network interface device.

63. The data processor program product of claim 60 wherein the control command initiates disabling transmission of data signals between an upstream communication apparatus and a data processing system connected to the network interface device.

64. The data processor program product of claim 60 wherein the control command initiates terminating a first conductor of a paired-conductor transmission line with a second conductor of the paired-conductor transmission line.

65. The data processor program product of claim 60 wherein the control command initiates terminating at least one conductor of a first paired-conductor transmission line with at least one conductor of a second paired-conductor transmission line.

66. The data processor program product of claim 60 wherein the control command initiates connecting a test load between a first conductor and a second conductor of a paired-conductor transmission line.

67. The data processor program product of claim 60 wherein:
a first subscriber premises paired-conductor transmission line is connected between the network interface device and a telecommunication device;
a second subscriber premises paired-conductor transmission line is connected between the network interface device and a data processing system; and
the control command initiates inverting a connected orientation of the first and the second paired-conductor transmission lines with respect to the telecommunication device and the data processing system.

68. The data processor program product of claim 60 wherein enabling the data processor to facilitate determining the control function associated with the control command includes enabling the data processor to facilitate correlating a control command with one of a plurality of available control functions.

69. The data processor program product of claim 60 wherein enabling the data processor to facilitate altering the network interface device from the present control state to the requested control state includes transmitting a control state signal from a command processor of a state enabler to a line controller of the state enabler in response to receiving the control command at the command processor of the state enabler.

70. The data processor program product of claim 60 wherein enabling the data processor to facilitate altering the network interface device from the present control state to the requested control state includes enabling the data processor to facilitate altering the network interface device from a transmission-disabled state to a transmission-enabled state.

71. The data processor program product of claim 70 wherein:
altering the network interface device from the transmission-disabled state to the transmission-enabled state is performed in response to the network interface device receiving the control command; and
the control command initiates transmission of DSL signals between an upstream communication apparatus and a data processing system connected to the network interface device being enabled.

72. The data processor program product of claim 70 wherein transmission of data signals between an upstream communication apparatus and a data processing system connected to the network interface device is enabled when the network interface device is in the transmission-enabled state.

73. The data processor program product of claim 60 wherein enabling the data processor to facilitate altering the network interface device from the present control state to the requested control state includes enabling the data processor to facilitate altering the network interface device from a transmission-enabled state to a transmission-disabled state.

74. The data processor program product of claim 73 wherein:
altering the network interface device from the transmission-enabled state to the transmission-disabled state is performed in response to the network interface device receiving the control command; and
the control command initiates transmission of DSL signals between an upstream communication apparatus and a data processing system connected to the network interface device being disabled.

75. The data processor program product of claim 73 wherein transmission of data signals between an upstream communication apparatus and a data processing system connected to the network interface device is disabled when the network interface device is in the transmission-disabled state

76. The data processor program product of claim 60 wherein:
enabling the data processor to facilitate altering the network interface device from the present control state to the requested control state includes enabling the data processor to facilitate altering the network interface device from a transmission line non-terminated state to a transmission line terminated state; and
a first conductor of a paired-conductor transmission line is terminated to a second conductor of the paired-conductor transmission line when the network interface device is in the transmission line terminated state.

77. The data processor program product of claim 76 wherein:
altering the network interface device from the transmission line non-terminated state to the transmission line terminated state is performed in response to the network interface device receiving the control command; and
the control command initiates the first conductor of the paired-conductor transmission line being terminated to the second conductor of the paired-conductor transmission line.

78. The data processor program product of claim 60 wherein:
enabling the data processor to facilitate altering the network interface device from the present control state to the requested control state includes enabling the data processor to facilitate altering the network interface device from a transmission line conductor non-terminated state to transmission line conductor terminated state; and
at least one conductor of a first paired-conductor transmission line is terminated to at least one conductor of a second paired-conductor transmission line when the network interface device is in the transmission line conductor terminated state.

79. The data processor program product of claim 78 wherein:
altering the network interface device from the transmission line conductor non-terminated state to the transmission line conductor terminated state is performed in response to the network interface device receiving the control command; and
the control command initiates said at least one conductor of the first paired-conductor transmission line being terminated to said at least one conductor of the second paired-conductor transmission line.

80. The data processor program product of claim 60 wherein:
enabling the data processor to facilitate altering the network interface device from the present control state to the requested control state includes enabling the data processor to facilitate altering the network interface device from a premises equipment impedance load state to a test load state; and
a test load is terminated between a first conductor and a second conductor of a first paired-conductor transmission line when the network interface device is in the test load state.

81. The data processor program product of claim 80 wherein:
altering the network interface device from the premises equipment impedance load state to the test load state is performed in response to the network interface device receiving the control command; and
the control command initiates the test load being terminated between the first conductor and the second conductor of the first paired-conductor transmission line.

82. The data processor program product of claim 60 wherein:
a first subscriber premises paired-conductor transmission line is connected between the network interface device and a telecommunication device when the network interface device is in the first control state;
a second subscriber premises paired-conductor transmission line is connected between the network interface device and a data processing system when the network interface device is in the first control state; and
altering the network interface device from the present control state to the requested control state the control command initiates inverting a connected orientation of the first and the second paired-conductor transmission lines with respect to the telecommunication device and the data processing system.
